# EUROPEAN PATENT SPECIFICATION

(11) **EP 3 702 610 B1**
(45) Date of publication and mention of the grant of the patent: **22.12.2021**
(21) Application number: 19199085.2
(22) Date of filing: 24.09.2019
(51) Int. Cl.: F03D 3/06

(54) **VERTICAL AXIS WIND TURBINE WITH A VARIABLE GEOMETRY OF BLADES**
VERTIKALACHSENWINDTURBINE MIT VARIABLER GEOMETRIE DER BLÄTTER
ÉOLIENNE À AXE VERTICAL POSSÉDANT DES PALES À GÉOMÉTRIE VARIABLE

(30) Priority: 21.02.2019 PL 42898419
(43) Date of publication of application: 02.09.2020
(73) Proprietor: Politechnika Lodzka, 90-924 Lodz (PL)
(72) Inventor: Obidowski, Damian, 95-020 Stroza (PL); Sobczak, Krzysztof, 90-348 Lodz (PL); Jozwik, Krzysztof, 94-234 Lodz (PL); Reorowicz, Piotr, 91-464 Lódz (PL)
(74) Representative: Wroblewski, Marcin Jan

(56) References cited:
- EP-A1- 2 610 483
- DE-A1- 3 000 134
- DE-A1-102012 019 268
- FR-A1- 2 289 765
- KR-A- 20120 131 804

## Description

The present invention relates to a vertical axis wind turbine with a variable geometry of blades.

Vertical axis wind turbines, commonly referred to as VAWTs, are characterized by lower energy conversion efficiency, understood as wind kinetic energy conversion efficiency, than commonly used horizontal axis wind turbines (HAWTs), but enjoy numerous advantages such as simple design, operation under the wind blowing from different directions and with various velocities; they operate quieter and are safe. Due to these qualities, they are applied in urbanized areas.

A vertical axis wind turbine, referred to as a Savonius turbine, was invented by S.J. Savonius, a Finnish engineer, and described in the U.S. Patent No. 1,697,574 issued on 1st January 1929. The Savonius turbine resembles the letter "S" in the top view, and its both blades are semi-cylindrically shaped. The rotor is driven with a force resulting from the pressure distribution on convex and concave parts of both the rotor blades (a resultant of drag and lift forces).

Typical Savonius turbines are described, for instance, in the patent applications DE102007049590 A1 and US5494407. In the patent application DE3519700A1, blades shaped differently than the original semi-cylindrical ones are provided. Looking from the outer side of the turbine, they are initially semi-cylindrically shaped, then a degree of their curvature increases significantly and assumes the shape of a flat area in the central part. Due to its small dimensions, this is a low-power turbine for households or it can be applied to power small autonomous mechanical or electrical energy receivers. Another example is disclosed in DE 10 2012 019268 A1.

The primary advantages of this sort of turbines is their simple and, thus, cheap and reliable design and a high starting torque. Standard Savonius turbines are independent of the wind direction, thus they do not need any auxiliary systems of positioning. They are classified as turbines employing a drag force, hence they operate at relatively low rotational speeds (tip speed ratios) and low air flow velocities. As a result, they are characterized by a low level of noise emission. Owing to these properties, Savonius turbines are suitable for urbanized areas. Apart from instances of their location on separate constructions, i.e., towers, these turbines are very often placed on building roofs. Unfortunately, the primary disadvantage of these turbines is their low efficiency with a power coefficient within the range Cp = 0.15 - 0.20 for standard designs. It results in the fact that this kind of turbines in its basic variant is not usually a reasonable alternative when compared to other types of wind turbines.

However, owing to advantages of Savonius turbines, they are subject to numerous investigations aimed at increasing their efficiency. Many works focus on modification of the blade shape or application of additional elements to direct the air flow towards blades. The replacement of conventional semi-cylindrical blades with more sophisticated shapes (elliptical, Bach-type or Benesch-type geometries) allows for increasing the power coefficient by a few percentage points if compared to the classic design. Other works present search for optimal dimensions of selected geometrical parameters of the blade and the whole rotor, e.g., an overlap gap, a turbine aspect ratio, an effect of blade arms. Nevertheless, all these efforts do not allow the power coefficient to be increased significantly above the level of Cp = 0.25. The investigations are also active in the field of providing the turbine rotor with elements directing the wind towards the advancing blade (moving along the wind direction), deflectors shielding the returning blade (moving opposite to the wind direction) or even more elaborated wind direction guide systems. As a result of the application of more or less complex systems of shields, deflectors or guide vanes, researchers declare to achieve the levels of efficiency that exceed considerably Cp = 0.3. However, a disadvantage of such approaches consists in larger dimensions of the turbine, an increase in complexity of its geometry and dependence on the wind direction. In order to attain a high efficiency level, it is necessary to use wind direction guide systems, which is not an easy task due to their large size.

The patent application WO2013108953A1 presents blades consisting of several flat parts connected with pivots and assuming a semi-cylindrical shape under the wind pressure.

The patent application US6283711B1 presents a turbine composed of two semi-cylindrical blades, symmetrically assembled around the turbine axis of rotation. Each blade has two parts and consists of an inner blade of the fixed position with respect to the turbine shaft and an outer blade being its elongation. The inner and outer blades have different radii of curvature, where the radius of curvature of the inner blade is lower and equal to 0.6-0.8 of the outer blade radius. The blades are joined in such a way that the leading edge of the inner blade contacts the trailing edge of the outer blade. The attachment point of the outer blade curvature radius coincides with the turbine axis of rotation, whereas the axis of rotation of the inner blade is parallel to it.

The patent application WO2016073636A1 discloses an apparatus based on multiple wind turbines assembled in the cage, in a distance from the cage axis of rotation. Moreover, each turbine rotates around its axis of rotation. Turbines are positioned horizontally. The device operation is based on the Magnus effect. The device is to work in suspension, without any permanent attachment to the ground. The geometry of blades is variable, with the blade deflection controlled with cables. The blades deform symmetrically for each turbine. The global motion of turbine blades covers a rotation of the whole turbine around the cage axis and a rotation around the given turbine.

The essence of the invention is a vertical axis wind turbine with a variable geometry of blades, which comprises a frame, a shaft, at least two blades of variable curvature of the cross-section, characterized by the fact that the frame is equipped with two coaxial guide rings which are situated on opposite ends of the frame in the plane perpendicular to the shaft axis of rotation. Between the guide rings, parallelly to the shaft axis of rotation, there are blade arms that are attached kinetically to the guide rings with guide elements. Besides, the blade arms at their both ends are connected to the shaft by means of a linear slider that enables the blade arm motion at a variable distance from the shaft, whose axis of rotation is shifted with respect to the axis of the guide rings by an eccentricity equal to 0.01 of the frame diameter at least. The turbine also comprises at least one means for positioning the eccentricity line Y at the angle α with respect to the wind direction, where the angle α is higher than 0° and lower than 180°. Moreover, outer edges of the blades are connected to the blade arms and are in a constant mutual angular position with respect to the shaft, whereas the inner edges of blades are joined to the shaft. The blades are made of elastic materials characterized by high fatigue strength, whereas the curvature of their cross-sections depends on the angular position of the blade arms with respect to the straight line determined by intersection points of the plane of one of the guide rings with the shaft axis and the axis of the guide rings.

Preferably, the blades are made of spring steel, in particular X10CrNi18-8 (1.4310) steel.

Preferably, the blades are made of composite materials, in particular of laminated carbon fabrics.

Preferably, the blades are made of hybrid materials, in particular of such materials as sail canvas reinforced with fiberglass strips.

Preferably, the eccentricity falls within the range from 0.05 to 0.20 of the frame diameter.

Preferably, the means for positioning the eccentricity line Y at the angle α with respect to the wind direction has a form of an adjusting surface or a device controlled with an independent sensor of wind direction, preferably an electromechanical system, for example a motor.

The inner blade edges are connected with the shaft along their whole height, in a few points or at their ends only.

Preferably, the blades are connected with the shaft with elongated joints, preferably hinges or by insertion of one element into the other one.

Preferably, the guide elements have a form of multi-bearing carriages.

Preferably, the linear sliders are built of an elongated element with a constant cross-section, fixed to the shaft and a sliding piston being supported in the axial bearing.

Preferably, the angles between the linear sliders of adjacent blades are equal.

Preferably, the turbine comprises brackets fixed to the linear linkages with two arms of the same length or of different lengths, assembled principally at the linear linkage ends.

Due to a displacement of the axis of rotation of the turbine shaft with respect to the guide rings by an eccentricity in the solution according to the invention, an increase in the proportion between the frontal surface of the advancing blade with respect to the frontal surface of the returning blade is attained. Moreover, an application of the eccentricity and deformable Savonius turbine blades of variable, depending on the angular position, cross-section curvature, allows an increased efficiency of the wind turbine according to the invention to be obtained when compared to the Savonius turbine of a constant blade geometry and the same overall frontal area. Depending on the value of the eccentricity, it is possible to increase the turbine power coefficient by 50%-100% in comparison with conventional Savonius turbines. Furthermore, the turbine structure according to the invention allows its dimensions to be simplified and decreased with respect to turbines with systems of deflectors and wind adjustable guide vanes.

In the case of the solution according to the invention, as a result of the change in shape (deformation) of turbine blades, it is possible to increase the power coefficient even up to more than Cp = 0.35. An increase in the effective area of the advancing blade with a simultaneous bending of the returning blade is followed by an evident growth in efficiency. This increase depends on the deformation range of the blades. Suitable deformation of the blades is attained through a motion of blade arm ends along the guide rings positioned eccentrically to the rotor axis of rotation. Positive effects of a considerable increase in the power coefficient (efficiency) are obtained at relatively low eccentricities (from 0.01 of the turbine diameter), and this effect grows as the eccentricity grows. Though the system has to be adjusted to wind, its dimensions do not increase very significantly with respect to the rotor dimensions and are considerably lower than those used in the systems with deflectors and wind direction guide systems.

The embodiment of the invention is presented by way of example in the following drawing, where:
- Fig. 1: illustrates a top view of the turbine blades according to the invention, in subsequent stages of operation;

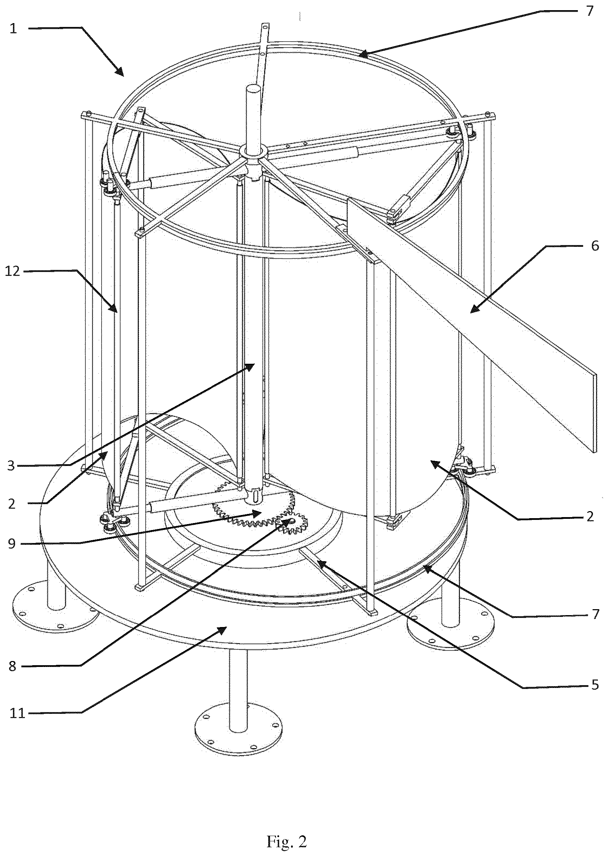

- Fig. 2.: illustrates a perspective top view of the turbine;

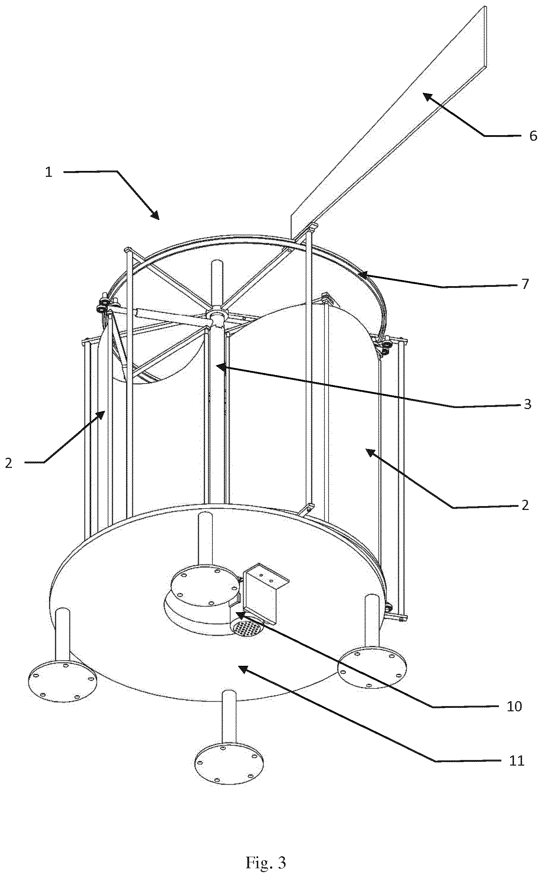

- Fig. 3.: illustrates a perspective bottom view of the turbine;

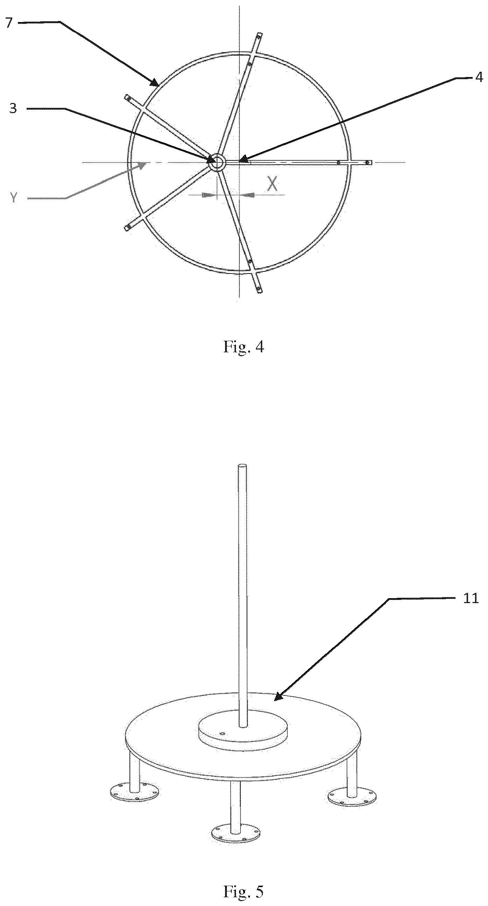

- Fig. 4.: illustrates a top view of the upper ring of the turbine frame with the eccentricity marked;
- Fig. 5.: illustrates a perspective view of the turbine base;

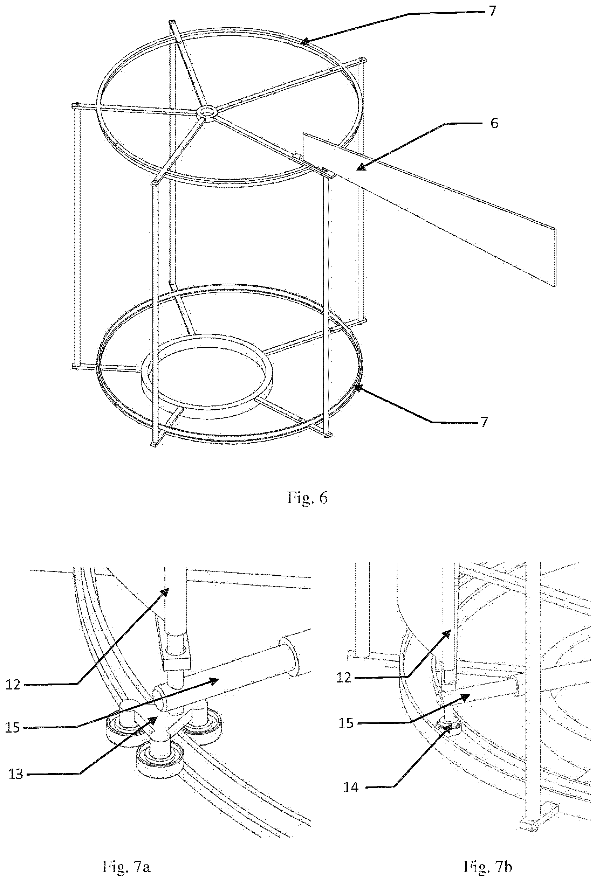

- Fig. 6.: illustrates a perspective view of the turbine frame;
- Figs. 7. a - b: illustrate views of exemplary connections of the blade arms to the guide rings according to the invention;
- Fig. 8.: illustrates a view of the guide rings with mounted linear sliders;
- Fig. 9.: illustrates a view of a guide ring with mounted linear sliders and arms of the bracket that determines the turbine blade deflection;
- Figs. 10 a-e: illustrate examples of connection of the turbine blades with the guide elements.

The wind turbine 1 with a vertical axis of rotation and a variable geometry of blades 2 comprises two blades 2 of a variable geometry, a frame 5 mounted in a rotating manner on a base 11, a hollow shaft 3 of the turbine 1, supported in bearings on the base axis 11. A connection of the frame 5 with the turbine base 11 is supported in sliding bearings, but it is possible to use rolling, magnetic or hydrodynamic bearing systems as well.

A generator 10 connected with a gear 9 to the shaft 3, whose task is to receive and converse mechanical energy from the motion of the turbine rotor, comprising the blades 2 and the shaft 3, into another form of energy, in this solution into an electrical one, is mounted to the turbine base 11. A shaft axis 8 of the generator is displaced with respect to the shaft axis 3 of the turbine 1, which allows the generator to be positioned in the stationary system and facilitates the energy reception as well as supporting the shaft 3 in bearings. The gear 9 in the presented example of the solution is a transmission gear, but it is also possible to apply belt transmissions, cycloidal or other gearings.

The frame 5 is equipped with two coaxially aligned guide rings 7, located on opposite ends of the frame 5 in the plane perpendicular to the axis of rotation of the shaft 3, where the axis of rotation of the shaft 3 of the turbine 1 is displaced with respect to the axis 4 of the guide rings 7 by the eccentricity X equal to at least 0.01 of the diameter of the frame 5. Between the guide rings 7, parallel to the axis of the shaft 3, there are blade arms 12 attached kinetically to the guide rings 7 with guide elements 13 in a form of multi-bearing carriages running externally along the races of the guide rings 7. It is also possible to apply guide elements in a form of single-roller carriages 14 running internally in the races of the guide rings 7. Alternatively, it is possible to embody these motion systems via sliding, rolling, magnetic or hydrodynamic bearings.

The blade arms 12 are connected at their both ends to the shaft 3 with linear sliders-15 transmitting the blade torque onto the shaft 3, which enable the movement of the blade arms 12 at a variable distance from the shaft 3. The linear sliders 15 of individual blades 2 in the present example are positioned at the angle of 180°. The linear sliders 15 is built of a longitudinal element 16 of a constant cross-section, fixed to the shaft 3 and a piston rod 17 supported in a sliding bearing. It enables reciprocating movement of the linear sliders 15, owing to which the blade arms 12 move away and get closer during the rotational movement with respect to the shaft axis 3, respectively, which translates into an increase and a decrease in the frontal area of the turbine blades.

The turbine 1 comprises also means 6 positioning the eccentricity line Y at the angle α, higher than 0° and lower than 180°, with respect to the wind direction. The means 6 has a form of an adjusting surface that positions the frame 5, and, consequently, the eccentricity line Y, in relation to the wind direction. The means 6 can also have a form of an electro-mechanical system, for instance, a motor controlled with an independent wind direction sensor. An application of the means 6 allows the proper position to be adjusted automatically.

Outer edges of the blades 2 are connected to the blade arms 12 and are in a constant mutual angular position with respect to the shaft 3.

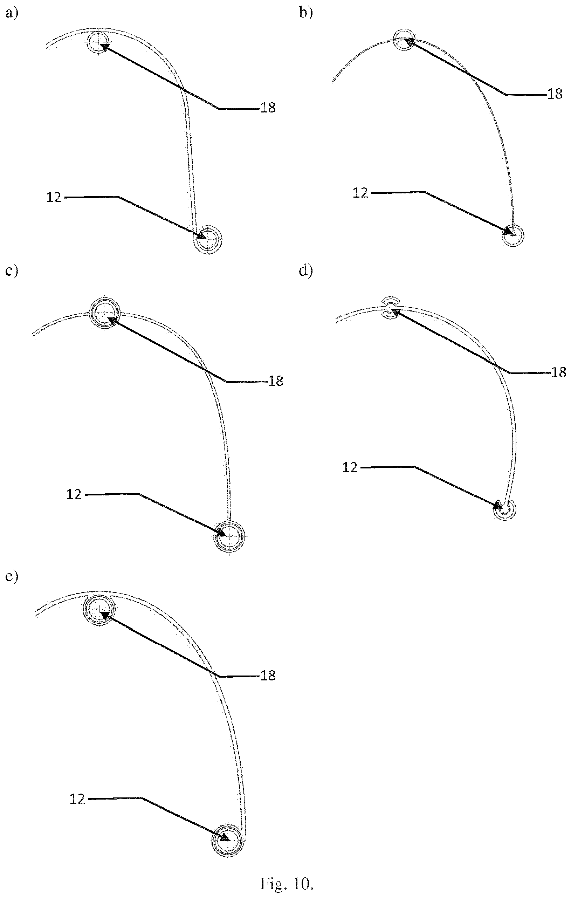

On the external side, the blades 2 of the turbine 1 are fixed to the blade arms 12, with an elongated joint by insertion of one element into the other one. Alternative sample variants of fixing the blades to the arms are presented in Figs. 10a-e. In Fig. 10a, the blade arm of the blade 2 is wound on the blade arm 12. On the other hand, in Fig. 10b a solution in which a connection of the blade arm 12 is fixed and cannot rotate is depicted. In turn, Fig. 10c illustrates a rotational connection of the blade arm 12 to the blade 2. Fig. 10d shows a solution in which the blade arm 12 is pivot-mounted with a constrained angle of rotation, whereas Fig. 10e illustrates a pivot connection of the bracket 18 and the blade arm 12 to the blade 2 without constrained rotation.

In turn, inner edges of the blades 2 are connected to the shaft 3 with longitudinal joints in a form of hinges. The connection can be also embodied by an insertion of one element into the other one, by supporting into bearings or by assembly of the blades 2 on ends of the shaft 3 only, which results in a gap that allows the working medium to flow between the blades.

The blades 2 are made of spring steel namely, e.g., X10CrNi18-8 (1.4310). However, it is possible to employ alternatively another kind of steel of the same properties, as well as composites, e.g., laminated carbon fabrics or hybrid materials made of various loosely bonded materials, e.g., sail canvas reinforced with fiberglass strips.

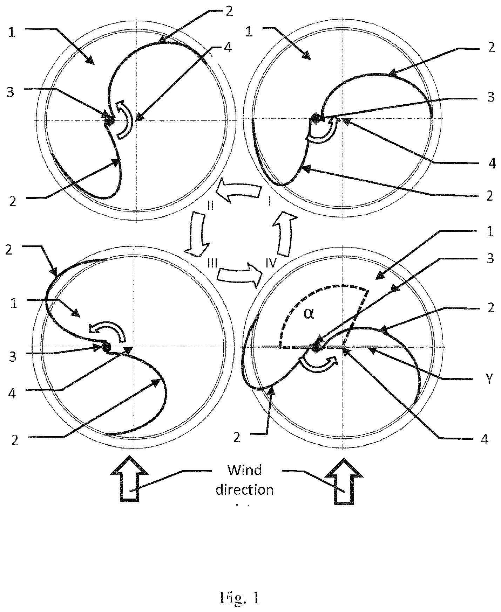

The principle of operation of the turbine 1 consists in conversion of the aerodynamic force acting onto the blades 2 into a torque transferred to the shaft 3, and, as a result, the kinetic energy of wind is converted into another energy, possible to be transferred, used directly or stored, e.g., electricity, obtained as a result of rotation of the shaft 8 of the generator 10. Outer edges of the blades move along the guide rings 7 of the frame 5, with their mutual angular position unaltered. A displacement of the axis of rotation of the shaft 3 of the turbine 1 with respect to the axis 4 of the guide rings 7 by an eccentricity, results in deformation of the blades 2, i.e., a change in their geometry, during the rotational motion of the shaft 3 and the blades 2. This displacement is also followed by an increase in the frontal area of the advancing blade (moving along the wind direction) and a decrease in the frontal surface of the returning blade. Due to the eccentrically positioned shaft 3, the advancing blade 2 attains a greater surface area open to the wind than the returning blade 2. As an effect of the eccentricity, the ratio of the turbine active area (advancing blade area) to the passive area (returning blade area) increases. The principle of operation is illustrated in Fig. 1, where the arrangement of the blades 2 of the turbine 1 in subsequent phases of operation of the turbine 1 is presented.

The turbine 1 requires proper alignment of the eccentricity line Y with respect to the wind direction. The proper alignment of the turbine is attained via correct turning, depending on the wind direction, of the frame 5 of the turbine 1, which is achieved by at least one means 6 positioning the eccentricity line Y with respect to the wind direction. As a result of wind operation, adjustment of the turbine towards the wind direction is performed, which is to be understood as a rotation of the turbine frame 5 with respect to the turbine base 11.

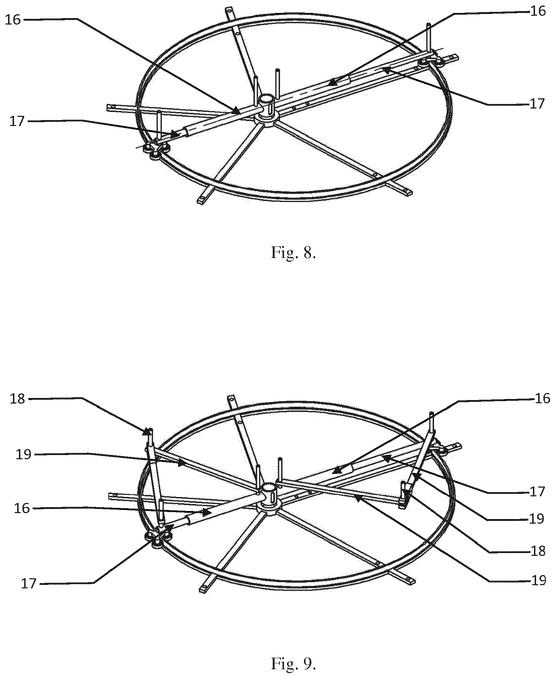

In the examples of the embodiment in which turbine blades are made of such elastic materials as sail canvas or in the case the blade is to be shaped in another way than the one that follows from natural deflection of the given material, the central part of the blade is supported on the bracket 18 located along the blade height, fixed in its upper and lower part to the linear linkages 15 with the arms 19, as shown in Fig. 9. The lengths of the arms 19 determine the position of the bracket 18 and shape the deflection of rotor blades. The arms 19 can be of the same length to keep the blade symmetry or of different length in the case of asymmetrical shaping of the blade curvature.

Examples of variants of fixing the bracket to the blade are presented in Figs. 10 a-e. In Fig. 10a a solution, in which the bracket 18 is placed at the inner side of the blade and is not fixed to it permanently (it can move along its inner surface), is presented. In Fig. 10b a solution, in which the bracket 18 has a cut limiting the blade deflection, is shown. In turn, Fig. 10c illustrates a rotational connection of the bracket 18, whereas Fig. 10d depicts a solution, in which the bracket 18 consists of two parts setting the blade surface from the outside and from the inside. On the other hand, Fig. 10e shows a pivot connection of the bracket 18 to the blade 2.

The turbine according to the invention can also operate in the environment of a flow of other fluids (gases and liquids).

## Claims

1. A vertical axis wind turbine with a variable geometry of blades comprising a frame, a shaft, at least two blades of variable cross-section curvature, **characterized in that**
- the frame (5) is equipped with two coaxially arranged guide rings (7), placed at the opposite ends of the frame (5) in the plane perpendicular to the shaft axis of rotation (3),
- between the guide rings (7), parallelly to the shaft axis (3), there are blade arms (12) that are attached kinetically to the guide rings (7) with guide elements (13, 14), moreover, the blade arms (12) are connected at their both ends to the shaft (3) with linear sliders (15) that enable the blade arms (12) to move at a variable distance from the shaft (3),
- the shaft axis of rotation (3) of the turbine (1) is displaced with respect to an axis (4) of the guide rings (7) by an eccentricity equal to, at least, 0.01 of the diameter of the frame (5),
- it comprises at least one means (6) for positioning the eccentricity line (Y) at the angle α with respect to the wind direction, where the angle α is higher than 0° and lower than 180°,
- moreover, outer edges of the blades (2) are connected to the blade arms (12) and they are in a constant mutual angular position with respect to the shaft (3),
- whereas inner edges of the blades (2) are connected to the shaft (3),
- where the blades (2) are made of elastic materials of high fatigue strength, and the curvature of their cross-sections depends on an angular position of the blade arms (12) with respect to the straight line determined by the points of intersection of the plane of one of the guide rings (7) with the shaft axis (3) and the axis (4) of the guide rings (7).

2. The turbine according to claim 1, **characterized in that** the blades (2) are made of spring steel, preferably X10CrNi18-8 (1.4310) steel.

3. The turbine according to claim 1, **characterized in that** the blades (2) are made of composite materials, preferably laminated carbon fabrics.

4. The turbine according to claim 1, **characterized in that** the blades (2) are made of hybrid materials, preferably sail canvas reinforced with fiberglass strips.

5. The turbine according to any one of claims 1 - 4, **characterized in that** the eccentricity (X) is equal from 0.05 to 0.20 of the frame diameter (5).

6. The turbine according to any one of claims 1 - 5, **characterized in that** the means (6) positioning the eccentricity line Y at the angle α with respect to the wind direction has a form of an adjusting surface or a device controlled with an independent sensor of wind direction, preferably a motor.

7. The turbine according to any one of claims 1 - 6, **characterized in that** inner edges of the blades (2) are connected to the shaft (3) along their whole length, in a few points or at their ends only.

8. The turbine according to any one of claims 1 - 7 **characterized in that** the blades (2) are connected to the shaft (3) with elongated joints, preferably hinges or by insertion of one element into the other one.

9. The turbine according to any one of claims 1 - 8 **characterized in that** guiding elements (13, 14) have a form of multi-bearing carriages.

10. The turbine according to any one of claims 1 - 9 **characterized in that** linear sliders (15) are built of an elongated element (16) of a constant cross-section fixed permanently to the shaft (3) and a piston rod (17) being supported in the sliding bearing in it.

11. The turbine according to any one of claims 1 - 10 **characterized in that** the angles between the linear sliders (15) of the adjacent blades (2) are equal.

12. The turbine according to any one of claims 1 - 11 **characterized in that** it comprises brackets (18) fixed to the linear sliders (15) with arms (19) of the same or different length, fixed principally on the ends of the linear sliders (15).

## Patentansprüche

1. Windturbine mit vertikaler Achse und variabler Geometrie der Flügel, die einen Rahmen, eine Welle und mindestens zwei Flügel mit variabler Querschnittskrümmung umfasst, **dadurch gekennzeichnet, dass**
- der Rahmen (5) mit zwei koaxial angeordneten Führungsringen (7) ausgestattet ist, die an den gegenüberliegenden Enden des Rahmens (5) in der Ebene senkrecht zur Drehachse der Welle (3) angeordnet sind,
- zwischen den Führungsringen (7) parallel zur Wellenachse (3) Schaufelarme (12) angeordnet sind, die mit Führungselementen (13, 14) kinetisch an den Führungsringen (7) befestigt sind, und dass die Schaufelarme (12) an ihren beiden Enden mit linearen Schiebern (15) mit der Welle (3) verbunden sind, die es den Schaufelarmen (12) ermöglichen, sich in einem variablen Abstand zur Welle (3) zu bewegen,
- die Drehachse (3) der Turbine (1) in Bezug auf eine Achse (4) der Führungsringe (7) um eine Exzentrizität verschoben ist, die mindestens 0,01 des Durchmessers des Rahmens (5) beträgt,
- sie mindestens ein Mittel (6) zur Positionierung der Exzentrizitätslinie (Y) unter dem Winkel a in Bezug auf die Windrichtung umfasst, wobei der Winkel α größer als 0° und kleiner als 180° ist,
- außerdem die Außenkanten der Schaufeln (2) mit den Schaufelarmen (12) verbunden sind und sie sich in einer konstanten gegenseitigen Winkellage in Bezug auf die Welle (3) befinden,
- wobei die Innenkanten der Schaufeln (2) mit der Welle (3) verbunden sind,
- wobei die Schaufeln (2) aus elastischen Materialien mit hoher Dauerfestigkeit bestehen und die Krümmung ihrer Querschnitte von einer Winkelstellung der Schaufelarme (12) in Bezug auf die durch die Schnittpunkte der Ebene eines der Führungsringe (7) mit der Wellenachse (3) und der Achse (4) der Führungsringe (7) bestimmte Gerade abhängt.

2. Turbine nach Anspruch 1, **dadurch gekennzeichnet, dass** die Schaufeln (2) aus Federstahl, vorzugsweise aus X10CrNi18-8 (1.4310)-Stahl, hergestellt sind.

3. Turbine nach Anspruch 1, **dadurch gekennzeichnet, dass** die Schaufeln (2) aus Verbundwerkstoffen, vorzugsweise aus laminierten Kohlenstoffgeweben, hergestellt sind.

4. Turbine nach Anspruch 1, **dadurch gekennzeichnet, dass** die Schaufeln (2) aus Hybridmaterialien, vorzugsweise aus mit Glasfaserstreifen verstärktem Segeltuch, hergestellt sind.

5. Turbine nach einem der Ansprüche 1-4, **dadurch gekennzeichnet, dass** die Exzentrizität (X) zwischen 0,05 und 0,20 des Rahmendurchmessers (5) beträgt.

6. Turbine nach einem der Ansprüche 1-5, **dadurch gekennzeichnet, dass** das Mittel (6) zur Positionierung der Exzentrizitätslinie Y im Winkel a zur Windrichtung die Form einer Stellfläche oder einer mit einem unabhängigen Windrichtungssensor, vorzugsweise einem Motor, gesteuerten Vorrichtung hat.

7. Turbine nach einem der Ansprüche 1 bis 6, **dadurch gekennzeichnet, dass** die Innenkanten der Schaufeln (2) mit der Welle (3) über ihre gesamte Länge, in einigen Punkten oder nur an ihren Enden verbunden sind.

8. Turbine nach einem der Ansprüche 1 bis 7, **dadurch gekennzeichnet, dass** die Schaufeln (2) mit der Welle (3) durch längliche Verbindungen, vorzugsweise Scharniere oder durch Einsetzen eines Elements in das andere, verbunden sind.

9. Turbine nach einem der Ansprüche 1 bis 8, **dadurch gekennzeichnet, dass** die Führungselemente (13, 14) die Form von Mehrlagerschlitten haben.

10. Turbine nach einem der Ansprüche 1 bis 9, **dadurch gekennzeichnet, dass** die linearen Schieber (15) aus einem langgestreckten Element (16) mit konstantem Querschnitt, das fest mit der Welle (3) verbunden ist, und einer Kolbenstange (17) bestehen, die in dem darin befindlichen Gleitlager gelagert ist.

11. Turbine nach einem der Ansprüche 1 bis 10, **dadurch gekennzeichnet, dass** die Winkel zwischen den linearen Schiebern (15) der benachbarten Schaufeln (2) gleich sind.

12. Turbine nach einem der Ansprüche 1 bis 11, **dadurch gekennzeichnet, dass** sie Halterungen (18) umfasst, die an den linearen Gleitern (15) mit Armen (19) gleicher oder unterschiedlicher Länge befestigt sind, die hauptsächlich an den Enden der linearen Läufer (15) befestigt sind.

## Revendications

1. Une turbine éolienne à axe vertical avec une géométrie variable de pales, comprenant un cadre, un arbre, au moins deux pales de courbure en coupe transversale variable, **caractérisée en ce que**
- le cadre (5) est équipé de deux anneaux de guidage (7) disposés coaxialement, placés aux extrémités opposées du cadre (5) dans le plan perpendiculaire à l'axe de rotation de l'arbre (3),
- entre les anneaux de guidage (7), parallèlement à l'axe de l'arbre (3), il y a des bras de pale (12) qui sont attachés cinétiquement aux anneaux de guidage (7) avec des éléments de guidage (13, 14), de plus, les bras de pale (12) sont reliés au niveau de leurs deux extrémités à l'arbre (3) avec des coulisseaux linéaires (15) qui permettent aux bras de pale (12) de se déplacer à une distance variable depuis l'arbre (3),
- l'axe de rotation de l'arbre (3) de la turbine (1) est déplacé par rapport à un axe (4) des anneaux de guidage (7) d'une excentricité égale, au moins, à 0,01 du diamètre du cadre (5),
- elle comprend au moins un moyen (6) pour positionner la ligne d'excentricité (Y) à l'angle α par rapport à la direction du vent, où l'angle α est supérieur à 0° et inférieur à 180°,
- en outre, les bords extérieurs des pales (2) sont reliés aux bras de pale (12) et ils sont dans une position angulaire mutuelle constante par rapport à l'arbre (3),
- tandis que les bords intérieurs des pales (2) sont reliés à l'arbre (3),
- où les pales (2) sont faites de matériaux élastiques à haute résistance à la fatigue, et la courbure de leurs sections transversales dépend d'une position angulaire des bras de pale (12) par rapport à la ligne droite déterminée par les points d'intersection du plan de l'un des anneaux de guidage (7) avec l'axe de l'arbre (3) et l'axe (4) des anneaux de guidage (7).

2. La turbine selon la revendication 1, **caractérisée en ce que** les pales (2) sont fabriqué en acier à ressort, de préférence en acier X10CrNi18-8 (1.4310).

3. La turbine selon la revendication 1, **caractérisée en ce que** les pales (2) sont fabriquées en matériaux composites, de préférence en tissus de carbone stratifiés.

4. La turbine selon la revendication 1, **caractérisée en ce que** les pales (2) sont fabriquées en matériaux hybrides, de préférence en toile à voile renforcée par des bandes de fibre de verre.

5. La turbine selon l'une quelconque des revendications 1 à 4, **caractérisée en ce que** l'excentricité (X) est égale à 0,05 à 0,20 du diamètre du cadre (5).

6. La turbine selon l'une quelconque des revendications 1 à 5, **caractérisée en ce que** le moyen (6) positionnant la ligne d'excentricité Y à l'angle α par rapport à la direction du vent a la forme d'une surface de réglage ou d'un dispositif commandé par un capteur indépendant de la direction du vent, de préférence un moteur.

7. La turbine selon l'une quelconque des revendications 1 à 6, **caractérisée en ce que** les bords intérieurs des pales (2) sont reliés à l'arbre (3) sur toute leur longueur, en quelques points ou à leurs extrémités seulement.

8. La turbine selon l'une quelconque des revendications 1 à 7, **caractérisée en ce que** les pales (2) sont reliées à l'arbre (3) par des joints allongés, de préférence des charnières ou par insertion d'un élément dans l'autre.

9. La turbine selon l'une quelconque des revendications 1 à 8, **caractérisée en ce que** les éléments de guidage (13, 14) ont une forme de chariots à plusieurs paliers.

10. La turbine selon l'une quelconque des revendications 1 à 9, **caractérisée en ce que** les coulisseaux linéaires (15) sont constitués d'un élément allongé (16) d'une section transversale constante fixé de façon permanente à l'arbre (3) et d'une tige de piston (17) étant supportée dans le palier coulissant dans celle-ci.

11. La turbine selon l'une quelconque des revendications 1 à 10, **caractérisée en ce que** les angles entre les coulisseaux linéaires (15) des pales adjacentes (2) sont égaux.

12. La turbine selon l'une quelconque des revendications 1 à 11 **caractérisée en ce qu'**elle comprend des supports (18) fixés aux coulisseaux linéaires (15) avec des bras (19) de longueur identique ou différente, fixés principalement aux extrémités des coulisseaux linéaires (15).
